(19) Europäisches Patentamt
European Patent Office
Office européen des brevets

(11) **EP 2 090 051 B1**

(12) **EUROPEAN PATENT SPECIFICATION**

(45) Date of publication and mention
of the grant of the patent:
**13.06.2012 Bulletin 2012/24**

(51) Int Cl.:
***H04L 27/26*** (2006.01)

(21) Application number: **07826567.5**

(22) Date of filing: **27.09.2007**

(86) International application number:
**PCT/IB2007/053933**

(87) International publication number:
**WO 2008/041160 (10.04.2008 Gazette 2008/15)**

(54) **METHOD AND APPARATUS FOR GENERATING DATA PACKETS FOR TRANSMISSION IN AN OFDM COMMUNICATION SYSTEM**

VERFAHREN UND VORRICHTUNG ZUM ERZEUGEN VON DATENPAKETEN ZUR ÜBERTRAGUNG IN EINEM OFDM-KOMMUNIKATIONSSYSTEM

PROCÉDÉ ET APPAREIL POUR GÉNÉRER DES PAQUETS DE DONNÉES À TRANSMETTRE DANS UN SYSTÈME DE COMMUNICATION OFDM

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **02.10.2006 EP 06121593**

(43) Date of publication of application:
**19.08.2009 Bulletin 2009/34**

(73) Proprietor: **NXP B.V.**
**5656 AG Eindhoven (NL)**

(72) Inventor: **PU, Tianyan**
**Redhill Surrey RH1 5HA (GB)**

(74) Representative: **Williamson, Paul Lewis**
**NXP Semiconductors**
**Intellectual Property and Licensing**
**Red Central**
**60 High Street**
**Redhill**
**Surrey RH1 1NY (GB)**

(56) References cited:
**JP-A- 2003 051 806      US-A1- 2005 190 817**
**US-A1- 2006 188 003**

**Description**

FIELD OF THE INVENTION

The present invention relates to a method and apparatus for generating data packets for transmission in an OFDM communication system.

BACKGROUND OF THE INVENTION

Orthogonal frequency division multiplexing (OFDM) systems have gained a lot of popularity in recent years partly due to their inherent multi-path resilience properties. A number of standards (such as 802.11a, 802.1 g, DVB-T etc.) established in the past few years use OFDM based physical layer (PHY). Most of these standards are for packet based applications such as wireless local area networks (WLANs) and wireless personal area networks (WPANs). In these OFDM systems, the data is transmitted in short bursts (usually in multiple Kbytes). As such, each packet transmission includes fields specifically meant for packet detection and channel estimation. This information is transmitted as preamble at the beginning of each packet. The preamble consists of several symbols which can be derived from one source symbol. As an example, WiMedia has 30-symbol long preamble for standard packets and 18-symbol long preamble for burst packets. In addition, a frequency diversity technique known as time domain spreading is utilised to provide more error protection for data transmission with data rates lower than 320 Mbps.

For mobile and wireless systems, complementary metal-oxide semiconductor (CMOS) implementation of radio frequency (RF) circuits is becoming more and more important since it can integrate with CMOS digital baseband circuits and thus provide a cheaper solution. To compensate for implementation loss of CMOS RF circuits, some pre-compensation techniques (e.g. subcarrier pre-compensation) are always used in digital baseband. Also, WiMedia devices should not interfere with other fixed services terminals. In the single, near-by interference case, active mitigation techniques in the form of dynamic frequency selection (DFS) can provide sufficient protection for indoor fixed services terminals.

Conventional WiMedia PHY can provide data rates from 53.3 Mbps to 480 Mbps. It uses a rate -1/3 convolutional coder to encode the scrambled information bits. The encoded data is punctured to obtain different coding rates. Quadrature phase shift keying (QPSK) modulation is used for lower data rate modes (up to 200 Mbps), while dual carrier modulation (DCM) is used for the higher data rates modes. Additional frequency diversity is provided for the lower data rate modes through time domain spreading.

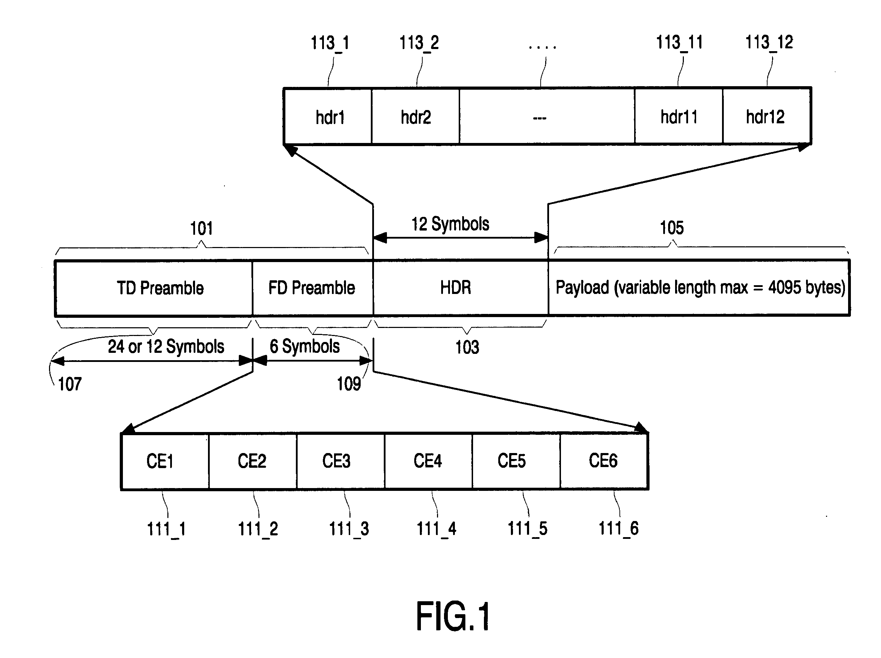

Fig.1 shows the WiMedia physical layer convergence protocol frame format. The PLCP frame consists of three portions a) preamble portion 101, b) header 103 and c) payload portion 105. The preamble 101 is composed of time domain (TD) training sequence 107 and frequency domain (FD) training sequence 109. The duration of the TD preamble 107 is either 24 or 12 OFDM symbols depending on the mode of transmission (standard or streaming). The TD preamble 107 is used by a receiver for packet and frame synchronization. The TD preamble 107 is followed by the FD preamble 109. The FD preamble 109, consisting of six OFDM symbols, and is used for channel estimation (CE) and therefore the symbols transmitted in this field are referred to as CE symbols CE1-6, 111_1, 111_2, 111_3, 111_4, 111_5, 111_6. The preamble is followed by 12 header (HDR) symbols 113_1, 113_2, ..., 113_11, 113_12 and a variable number of pay load symbols 105 having a maximum, for example, of 4095 bytes. The header symbols 103 are transmitted at the base rate (53.3 Mbps), while the payload symbols 105 are transmitted at the specified rate

Conventional WiMedia communication systems utilise frequency hopping OFDM system in order to provide higher data rates while keeping the system complexity to a reasonable level. In this system, the carrier frequency of OFDM symbol is modified on each hop and is selected from a set of three sub-bands based on the symbol number and the time-frequency will be applied to achieve frequency diversity and thus better error protection. In this case, the spreaded symbol will derive from the symbol just proceeding it. Specifically, for data rates of 53.3 and 880 Mbps, the $n^{th}$ spreaded symbols in time domain will be as follows:

$$S_{spreaded}(n) = P(n) * S_{original}(n)$$

where P is a cover sequence. For data rates of 106.7, 160 and 200 Mbps, the $n^{th}$ spreaded symbol will be as

$$S_{spreaded}(n) = P(n) * swap(S_{original}(n))$$

where *swap* is to switch In-phase component and Quanrature component of a complex value.

The preamble can be generated from one source symbol in the time domain assuming that the preamble symbols are identical except for their sign bits. However, this assumption will not hold in the systems with pre-compensation and/or DFS techniques. With these techniques, different subcarriers are modulated with different magnitude and can sometimes even be nulled out. Moreover, such a kind of modulation can change from time to time depending on operation conditions. In this disclosure, we propose an architecture to originate preamble generation in the frequency domain. Also, we propose a dual time spreading structure. Several operation modes are proposed so that the system can switch among them to maximize the power efficiency.

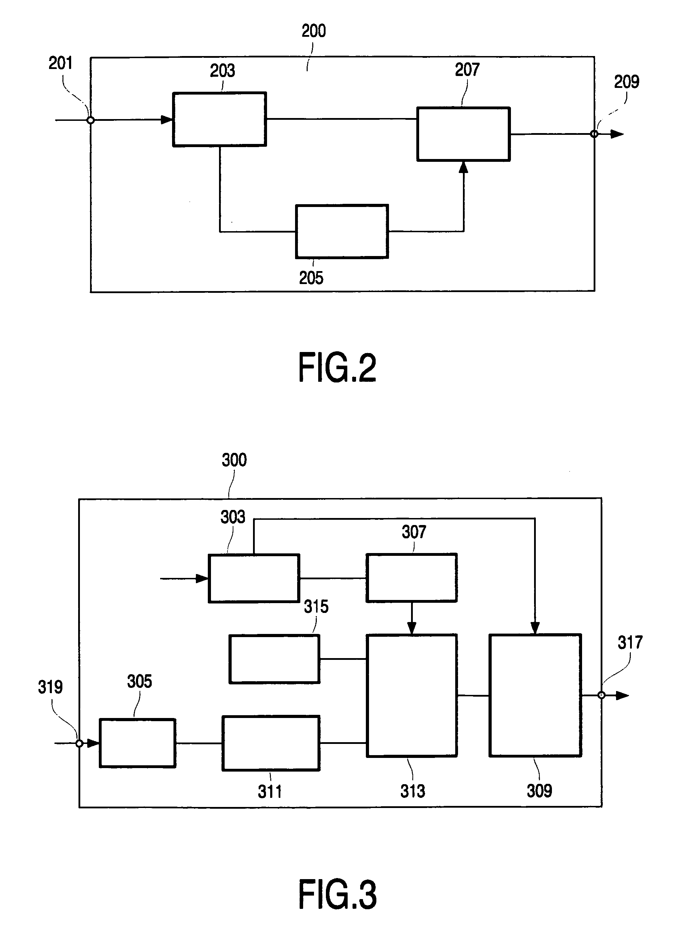

Preamble generation and time spreading is conventionally carried out in time domain as shown in Fig. 2.

The transmitter 200 comprises an input terminal 201 for receiving data to be transmitted. The input-terminal 201 is connected to a processor 203 for carrying out processing on the input data signals such as IFFT and time spreading. A preamble generator 205 generates the preamble. The processed signal and generated preamble are fed to a combiner 207 for inserting required prefixes and guard symbols and the completed data packet is output on the output terminal 209 for transmission.

It assumes that the preamble symbols are identical except for the cover sequence. As such, only a fixed set of symbols need to be stored in time domain. For each packet transmission, the 24 or 12 TD preamble symbols are derived by applying different cover bits to one source symbol. For FD preamble symbols and time-domain spreaded symbols, the same approach is used.

For wireless systems, one chip solution to replace current multiple-chip solutions has become increasingly popular. In one chip solution, all circuits including baseband and RF are integrated together using CMOS technology. Due to implementation loss from CMOS RF, baseband always needs to perform some pre-compensation before sending the signals to RF. In this case, the preamble may be changed from packet to packet depending on time-varying characteristics of CMOS RF. Also, RF circuits from different vendors have different characteristics. All these factors make it almost impossible to store all pre-compensated symbols in the time domain as before. Real-time loading of time-domain pre-compensated symbols by software is also not viable since it will take quite some time to load time-domain symbols while such a kind of loading may be required very often (e.g. packet by packet). As a result, generating preamble solely from the time domain is not feasible in CMOS RF systems.

As WiMedia PHY may hop to different band on 1 or 2-symbol basis (depending on TFC code), the spreaded symbol cannot always be solely derived from the original symbol since different band may have different pre-compensation mask. This makes time spreading difficult to implement solely in time domain.

Many existing systems propose generating preamble in the frequency domain. For example, US 2004/0114504 disclose efficient generation of the preamble in the frequency domain However, generating preamble solely from the frequency domain greatly increases the power consumption of the device.

US 2006/0188003 discloses obtaining and transmitting interference mitigation information associated with mitigating interference in a wireless device, in which a frame header is used to communicate information about modified subcarriers. The preamble, header or frame body may include OFDM symbols and a receiving device may synchronize its timing to OFDM symbol boundaries. The header may include a length, data rate or error correction information.

SUMMARY OF THE INVENTION

The present invention seeks to provide method and apparatus for generating data packets for transmission in which preamble generation and time spreading are controlled to minimise power consumption and is feasible in a CMOS RF system.

This is achieved according to aspects of the present invention by a method and apparatus as defined by the appended claims.

According to the invention the preamble is generated either in the frequency or the time domain depending on at least two conditions from the status of precompensation and dynamic frequency selection, the value of the time frequency code, the type of symbol and data rate. In switching preamble generation in this way power consumption is greatly reduced whilst maintaining feasibility for implementation of the transmitter CMOS.

Further reduction in power consumption can be obtained by switching time spreading between the frequency and time domain on the basis of these conditions.

Preferably, the invention can be applied to most packet-based communication systems (wireless, mobile, satellite, wiry...). As an example, it can be applied to IEEE 802.11a, 802.11g and 802.11n systems with integrated CMOS RF. It can also be applied to WiMedia systems.

BRIEF DESCRIPTION OF THE DRAWINGS

For a more complete understanding of the present invention, reference is now made to the following description taken in conjunction with the accompanying drawings, in which:

Fig. 1 illustrates the physical convergence protocol frame format for a typical WiMedia communication system;

Fig. 2 is a simplified schematic of a conventional transmitter;

Fig. 3 is a simplified schematic of a transmitter according to a preferred embodiment of the present invention; and

Fig. 4 illustrates the modes of operation of the transmitter according to the preferred embodiment of the present invention;

## DETAILED DESCRIPTION OF THE EMBODIMENTS

Although the preferred embodiment is described with reference to the WiMedia PHY, it can be appreciated that the invention can be applied to most packet-based communication systems.

A transmitter according to a preferred embodiment will now be described with reference to Fig. 3. The transmitter 300 comprises a configuration interface 303. The configuration interface 303 is connected to a data loader and controller 307 and an inverse fast fourier transformer (IFFT) 309. The interleaver 305 is connected to a mapper and time spreader 311. The mapper and time spreader 311 is connected to a pre-compensation/DFS processor 313. The data loader and controller 307 is connected to the pre-compensation/DFS processor 313. A preamble memory 315 is also connected to the pre-compensation/DFS processor 313. The output of the IFFT 309 is connected to an output terminal 317. The interleaver 305 is connected to an input terminal 319.

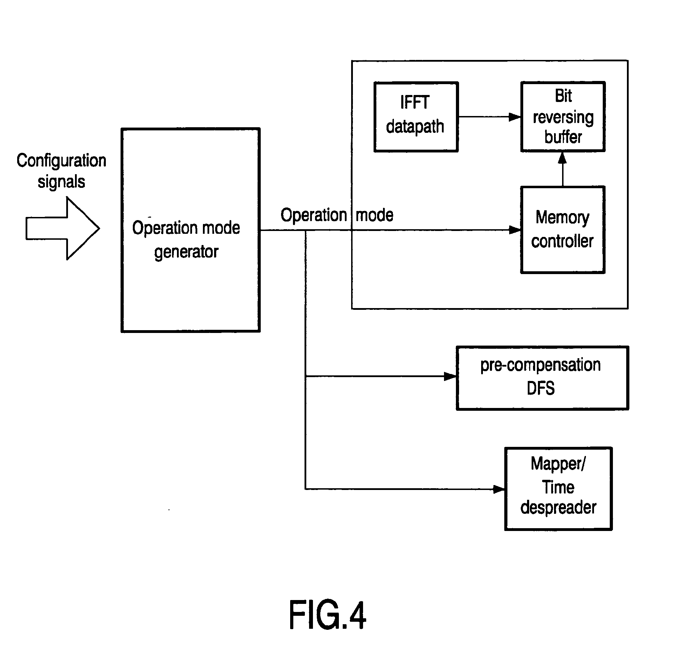

Operation of the transmitter according to the preferred embodiment will be described with reference to Figs. 3 and 4. Data to be processed is input on the input terminal 319 and hence input to the interleaver 305. The Mapper & Time spreader 311 gets the data from the interleaver 305 and provides the header symbols to pre-compensation/DFS block 313. The preamble memory 315 stores standard preamble sequences. The pre-compensation/DFS patterns, which modulate the input symbols, are loaded by data loader and controller block 307. Loading can be in real-time on a per-packet basis from the configuration interface 303. The preamble can be generated either in the frequency domain (before IFFT block 309) or in the time domain (in IFFT 309).

As a result, it is easy to implement pre-compensation/DFS for preamble generation. The pre-compensation/DFS block 313, in principle, charges or nulls out certain subcarriers. It is easier to implement pre-compensation/DFS in the frequency domain rather than in time domain since the subcarrier concept is only valid in the frequency domain.

Furthermore, as software loading of pre-compensation/DFS patterns is real-time, the software only needs to inform baseband about current pre-compensation/DFS pattern in the frequency domain, which contains much less data than its time domain representation. For example, the software only needs to pass the subcarrier index, which needs to be nulled out, to pre-compensation/DFS block rather than one entire OFDM symbol. With software rather than hardware to control the pre-compensation/DFS patterns, the system becomes more feasible.

With a strong support from IFFT buffer, the power consumption of preamble generation can be reduced significantly. As the preamble is originated from frequency domain, it is sometimes inevitable to invoke IFFT datapath (the most power consuming block in the transmitter). In the proposed architecture, IFFT buffer is used to produce the preamble symbols whenever possible so that the invoking of IFFT datapath can be minimized.

Further the transmitter of the preferred embodiment can perform time spreading in two locations, namely Mapper & Time Spreader block 311 and IFFT 309. Such a configuration can maximize the power efficiency while maintain system feasibilities. When current operation mode allows time spreading at IFFT buffer (time domain), the system will let IFFT buffer to produce the spreaded symbol. This helps to save power since IFFT datapath only needs to be activated every other symbol. Otherwise, time spreading can be activated at Mapper & Time spreader (frequency domain) and go through IFFT datapath.

As the preamble originates in the frequency domain, it needs to go through IFFT datapath, which is the most power hungry block in the transmitter chain. To reduce the power consumption, different operation situations are classified so that the system is able to switch among different operation modes based on current operation conditions. Fig. 4 shows how operation modes are generated to control the preamble generation and time spreading.

As shown in Fig. 4, there are a few configuration signals to control the generation of operation mode. Taking WiMedia PHY as an example, these signals will specify whether pre-compensation/DFS is enabled or not, the data type of current input, TFC for transmission, the data rate of payload for current transmission and preamble type. Based on these configuration signals, a certain operation mode is selected. Ten operation modes are defined for WiMedia systems as shown in Table 1 below.

Table 1

| Operation Mode | Conditions for entering the mode |
|---|---|
| 1 | Pre-compensation/DFS is disabled, or pre-compensation/DFS is enabled when TFC is 5 or 6 or 7. The current symbol is time preamble. |

(continued)

| Operation Mode | Conditions for entering the mode |
|---|---|
| 2 | Pre-compensation/DFS is disabled or pre-compensation/DFS is enabled when TFC is 5 or 6 or 7. The current symbol is frequency preamble. |
| 3 | Pre-compensation/DFS is enabled when TFC code is 3 or 4. The current symbol is time preamble. |
| 4 | Pre-compensation/DFS is enabled when TFC code is 3 or 4. The current symbol is frequency preamble. |
| 5 | Pre-compensation/DFS is not enabled, or pre-compensation/DFS is enabled when TFC is 3 or 4 or 5 or 6 or 7. The current symbol is header symbol or payload symbol with a data rate of 53.3 or 80 Mbps. |
| 6 | Pre-compensation/DFS is not enabled, or pre-compensation/DFS is enabled when TFC is 3 or 4 or 5 or 6 or 7. The symbol is payload symbol with a data rate of 106.7 or 160 or 200 Mbps. |
| 7 | Pre-compensation/DFS is enabled when TFC is 1 or 2. The current symbol is time preamble. |
| 8 | (a) Pre-compensation/DFS is enabled when TFC is 1 or 2 and the current symbol is frequency preamble, or current symbol is payload symbol with a data rate above 200 Mbps. |
| 9 | Pre-compensation/DFS is enabled when TFC is 1 or 2. The current symbol is header symbol or payload symbol with a data rate of 53.3 or 80 Mbps. |
| 10 | Pre-compensation/DFS is enabled when TFC is 1 or 2. The current symbol is payload symbol with a data rate of 106.7 or 160 or 200 Mbps. |

The operation mode control the Mapper/time spreader 311, pre-compensation/DFS processor 313 and IFFT 309 shown Table 2 below.

Table 2

| Operation Mode | Operation of IFFT, pre-compensation/DFS, Mapper/time spreader |
|---|---|
| 1 | IFFT performs one symbol calculation and then reads the results from its buffer 24 or 12 times (depending on preamble type). The read out symbols are modulated by the cover sequence, which is determined by TFC. Pre-compensation/DFS reads once from preamble memory and provides pre-compensated symbol to IFFT. Mapper/time spreader is not activated. |
| 2 | IFFT performs one symbol calculation and then reads the results from its buffer 6 times. Pre-compensation/DFS reads once from preamble memory and provides the pre-compensated symbol to IFFT. Mapper/time spreader is not activated. |
| 3 | IFFT performs 12 or 6 symbol calculations (depending on current preamble type). After each calculation, the data is read out twice from IFFT buffer. The read out symbols are modulated by the cover sequence. Pre-compensation/DFS read 12 or 6 times from preamble memory depending on preamble type. It provides the pre-compensated preamble symbols to IFFT. Mapper/time spreader is not activated. |
| 4 | IFFT performs 3 symbol calculations. After each calculation, the data is read out twice from IFFT buffer. Pre-compensation/DFS reads preamble memory 3 times and provides 3 pre-compensated symbols to IFFT. Mapper/time spreader is not activated. |

(continued)

| Operation Mode | Operation of IFFT, pre-compensation/DFS, Mapper/time spreader |
|---|---|
| 5 | IFFT reads data from its buffer twice per symbol calculation. The second symbol is modulated by pilot sequence.<br>Pre-compensation/DFS pre-compensates symbols from Mapper/time spreader.<br>Mapper/time spreader disables its time spreading functionality. |
| 6 | IFFT reads data from its buffer twice per symbol calculation. The second symbol is modulated by pilot sequence and then I/Q swapped.<br>Pre-compensation/DFS pre-compensates symbols from Mapper/time spreader.<br>Mapper/time spreader disables its time spreading functionality. |
| 7 | IFFT reads data from its buffer once per symbol calculation. For the odd-number symbols, they are further modulated by pilot sequence..<br>Pre-compensation/DFS read preamble memory 24 or 12 times (depending on preamble type) and provides pre-compensated symbols to IFFT.<br>Mapper/time spreader is not activated. |
| 8 | IFFT reads out data from its buffer once per symbol calculation.<br>Pre-compensation/DFS reads preamble memory 6 times and provides pre-compensated symbols to IFFT in case of FD preamble. Otherwise, it pre-compensates input symbols from Mapper/time spreader.<br>Mapper/time spreader is activated for payload symbol. |
| 9 | IFFT reads out data from its buffer once per symbol calculation. For the odd-number symbols, they are further modulated by pilot sequence.<br>Pre-compensation/DFS pre-compensates symbols from Mapper/time spreader.<br>Mapper/time spreader enables its time spreading functionality and reads the same symbol twice from interleaver. |
| 10 | IFFT reads out data from its buffer once per symbol calculation. For the odd-number symbols, they are modulated by pilot sequence and then I/Q swapped.<br>Pre-compensation/DFS pro-compensates symbols from Mapper/time spreader.<br>Mapper/time spreader enables its time spreading functionality and reads the same symbol twice from interleaver. |

The power efficiency of the different operation modes of Table 1 are summarized in Table 3 below.

Table 3

| Operation Mode | Power Efficiency |
|---|---|
| 1 | 1200% and 2400% (i.e. 1-symbol calculation of IFFT datapath generates 12 or 24 symbols). |
| 2 | 600% (i.e. 1-symbol calculation of IFFT datapath generates 6 symbols). |
| 3 | 200% (i.e. 1-symbol calculation of IFFT datapath generates 2 symbols). |
| 4 | 200% (i.e. 1-symbol calculation of IFFT datapath generates 2 symbols). |
| 5 | 200% (i.e. 1-symbol calculation of IFFT datapath generates 2 symbols). |
| 6 | 200% (i.e. 1-symbol calculation of IFFT datapath generates 2 symbols). |
| 7 | 100% (i.e. 1-symbol calculation of IFFT datapath generates 1 symbol). |
| 8 | 100% (i.e. 1-symbol calculation of 1FFT datapath generates 1 symbol). |
| 9 | 100% (i.e. 1-symbol calculation of IFFT datapath generates 1 symbol). |
| 10 | 100% (i.e. 1-symbol calculation of IFFT datapath generates 1 symbol). |

Although the preferred embodiment is with reference to a WiMedia system, the invention can be applied to other packet-based wireless systems like 802.1 1a/g wireless LAN systems, in which pure CMOS implementation (i.e. CMOS baseband plus CMOS RF) is utilized. As an example for 802.11a Wireless LAN system, the first preamble symbol can be always generated in frequency domain by real-time loading of pre-compensation patterns from software as described before. As the frequency hopping is not supported in this system, the remaining preamble symbols can be generated by reading out IFFT buffer repeatedly as in Mode 1 of Table 1.

The transmitter of the preferred embodiment is also compatible with conventional multiple chip solution. In which case pre-compensation/DFS, is disable invoking IFFT datapath once per-type of preamble and use IFFT buffer to generate most of preamble and generate spreaded symbol at IFFT buffer.

Although a preferred embodiment of the present invention has been illustrated in the accompanying drawings and described in the foregoing description, it will be understood that the invention is not limited to the embodiment disclosed but is capable of numerous modifications without departing from the scope of the invention as set out in the following claims.

**Claims**

1. A method for generating data packets for transmission in an orthogonal frequency division modulated communication system, the method comprising the steps of:

   - generating a plurality of header and payload symbols (101, 105);
   **characterised by** generating a preamble sequence (101) in the frequency domain or the time domain depending on at least two conditions from the status of precompensation and dynamic frequency selection, the value of a time frequency code, the type of symbol and data rate; and
   - combining said header and payload symbols and preamble sequence to generate a data packet.

2. A method according to claim 1 further comprising the step of time spreading said plurality of combined symbols in the frequency domain or the time domain depending on said at least two conditions.

3. A method according to claim 1 or 2, wherein said plurality of symbols are transmitted on a plurality of subcarriers and the method further comprises the steps of:

   - precompensating said plurality of subcarriers; and
   - dynamically selecting the frequency of said plurality of subcarriers.

4. A method according to claim 3, wherein a first one of said at least two conditions is based on the status of said precompensation and dynamic frequency selection , DFS, and/or the value of the time frequency code.

5. A method according to claim 4, wherein the status of said precompensation/DFS includes disabled, enabled and not enabled.

6. A method according to any one of the preceding claims, wherein a second one of said at least two conditions is based on type of current symbol and data rate.

7. Apparatus (300) for generating data packets for transmission in an orthogonal frequency division modulated communication system, the apparatus comprising:

   - means (305, 311) for generating a plurality of header and payload symbols;
   - means (315, 313; 309) for generating a preamble sequence in the frequency domain or the time domain depending on at least two conditions from the status of precompensation and dynamic frequency selection, the value of a time frequency code, the type of symbol and data rate;
   - a combiner (313) for combining said header and payload symbols and preamble sequence to generate a data packet; and
   - transmitting means (317) for transmitting said data packet.

8. Apparatus (300) according to claim 7 further comprising a time spreader for time spreading said plurality of symbols in the frequency domain or the time domain depending on said at least two conditions.

9. Apparatus (300) according to claim 7 or 8, wherein said plurality of symbols are transmitted a plurality of subcarriers and the transmitter further comprises a precompensation dynamic frequency selection DFS processor (313) for precompensating and dynamically selecting the frequency of said subcarriers.

10. Apparatus (300) according to claim 9, wherein said a first one of said at least two conditions is based on the status of said precompensation/DFS processor (313) and/or the value of the time frequency code.

11. Apparatus (300) according to claim 10, wherein the status of said precompensation/DFS processor (313) includes disabled, enabled and not enabled.

12. Apparatus (300) according to any one of claims 7 to 11, wherein a second one of said at least two conditions is based on type of current symbol and data rate.

13. A wireless communication system comprising a transmitter, the transmitter comprising apparatus (300) according to any one of claims 7 to 12.


**Patentansprüche**

1. Ein Verfahren zum Generieren von Datenpaketen für ein Aussenden in einem orthogonalen Frequenz-Division-Modulierten Kommunikationssystem, wobei das Verfahren die Schritte aufweist:

Generieren einer Vielzahl von Headern und Nutzlastsymbolen (101, 105);
**gekennzeichnet durch** Generieren einer Präamblesequenz (101) in dem Frequenzbereich oder dem Zeitbereich abhängig von zumindest zwei Bedingungen von dem Status einer Vorkompensation und einer dynamischen Frequenzselektion, dem Wert eines Zeitfrequenzkodes, der Art eines Symbols und einer Datenrate; und Kombinieren der Headern und Nutzlastsymbolen und der Präamblesequenz, um ein Datenpaket zu generieren.

2. Ein Verfahren gemäß Anspruch 1, welches ferner den Schritt eines Zeitspreizens der Vielzahl von kombinierten Symbolen in dem Frequenzbereich oder dem Zeitbereich abhängig von den zumindest zwei Bedingungen aufweist.

3. Ein Verfahren gemäß Anspruch 1 oder 2, wobei die Vielzahl von Symbolen auf einer Vielzahl von Unterträgern gesendet wird und das Verfahren ferner die Schritte aufweist:

Vorkompensieren der Vielzahl von Unterträgern; und
dynamisches Auswählen der Frequenz der Vielzahl von Unterträgern.

4. Ein Verfahren gemäß Anspruch 3, wobei eine erste der zumindest zwei Bedingungen auf dem Status der Vorkompensation und der dynamischen Frequenzselektion, DFS, und/oder dem Wert des Zeitfrequenzkodes basiert ist.

5. Ein Verfahren gemäß Anspruch 4, wobei der Status der Vorkompensation/DFS deaktiviert, aktiviert und nicht-aktiviert beinhaltet.

6. Ein Verfahren gemäß irgendeinem der vorangehenden Ansprüche, wobei eine zweite der zumindest zwei Bedingungen auf der Art des aktuellen Symbols und Datenrate basiert ist.

7. Vorrichtung (300) zum Generieren von Datenpaketen für ein Aussenden in einem orthogonalen Frequenz-Division-Modulierten Kommunikationssystem, wobei die Vorrichtung aufweist:

Mittel (305, 311) zum Generieren einer Vielzahl von Headern und Nutzlastsymbolen;
Mittel (315, 313, 309) zum Generieren einer Präamblesequenz in dem Frequenzbereich oder dem Zeitbereich abhängig von zumindest zwei Bedingungen von dem Status einer Vorkompensation und einer dynamischen Frequenzselektion, dem Wert eines Zeitfrequenzkodes, der Art eines Symbols und einer Datenrate; und
einen Kombinierer (313) zum Kombinieren der Headern und Nutzlastsymbolen und der Präamblesequenz, um ein Datenpaket zu generieren; und
Sendemittel (317) zum Senden des Datenpakets.

8. Vorrichtung (300) gemäß Anspruch 7, welche ferner einen Zeitspreizer zum Zeitspreizen der Vielzahl von Symbolen in dem Frequenzbereich oder dem Zeitbereich abhängig von den zumindest zwei Bedingungen aufweist.

**9.** Vorrichtung (300) gemäß Anspruch 7 oder 8, wobei die Vielzahl der Symbole auf einer Vielzahl von Unterträgern gesendet werden, und der Sender ferner einen Vorkompensation/ dynamische Frequenzselektion DFS Prozessor (313) zum Vorkompensieren und dynamischen Auswählen der Frequenz der Unterträger aufweist.

**10.** Vorrichtung (300) gemäß Anspruch 9, wobei eine erste der zumindest zwei Bedingungen auf dem Status des Vorkompensation/DFS Prozessors (313) und/oder dem Werts des Zeitbereichscodes basiert ist.

**11.** Vorrichtung (300) gemäß Anspruch 10, wobei der Status des Vorkompensation/DFS Prozessors (313) deaktiviert, aktiviert und nicht-aktiviert beinhaltet.

**12.** Vorrichtung (300) gemäß irgendeinem der Ansprüche 7 bis 11, wobei eine zweite der zumindest zwei Bedingungen auf der Art des aktuellen Symbols und Datenrate basiert ist.

**13.** Ein drahtloses Kommunikationssystem, welches einen Sender aufweist, wobei der Sender eine Vorrichtung (300) gemäß irgendeinem der Ansprüche 7 bis 12 aufweist.

**Revendications**

**1.** Procédé de génération de paquets de données pour leur transmission dans un système de communication modulé par division fréquentielle orthogonale, le procédé comprenant les étapes suivantes :

- génération d'une pluralité de symboles d'entête et de charge utile (101, 105) ;
**caractérisé par** la génération d'une séquence de préambule (101) dans le domaine fréquentiel ou dans le domaine temporel en fonction d'au moins deux conditions parmi l'état de pré-compensation et de sélection dynamique de fréquence, la valeur d'un code temps-fréquence, le type de symbole et le débit de données ; et
- la combinaison desdits symboles d'entête et de charge utile et de la séquence de préambule pour générer un paquet de données.

**2.** Procédé selon la revendication 1, comprenant en outre l'étape consistant à étaler dans le temps ladite pluralité de symboles combinés dans le domaine fréquentiel ou dans le domaine temporel en fonction desdites deux conditions au moins.

**3.** Procédé selon les revendications 1 ou 2, dans lequel ladite pluralité de symboles est transmise sur une pluralité de sous-porteuses et dans lequel le procédé comporte en outre les étapes suivantes :

- pré-compensation de ladite pluralité de sous-porteuses ; et
- sélection dynamique de la fréquence de ladite pluralité de sous-porteuses.

**4.** Procédé selon la revendication 3, dans lequel une première desdites deux conditions au moins est fondée sur l'état de ladite pré-compensation et la sélection dynamique de fréquence, DFS, et/ou sur la valeur du code temps-fréquence.

**5.** Procédé selon la revendication 4, dans lequel l'état de ladite pré-compensation / DFS comprend désactivé, activé et non activé.

**6.** Procédé selon l'une quelconque des revendications précédentes, dans lequel une deuxième parmi lesdites deux conditions au moins est fondée sur le type de symbole courant et sur le débit de données.

**7.** Appareil (300) pour la génération de paquets de données pour leur transmission dans un système de communication modulé par division fréquentielle orthogonale, l'appareil comprenant :

- des moyens (305, 311) pour la génération d'une pluralité de symboles d'entête et de charge utile ;
- des moyens (315, 313 ; 309) pour la génération d'une séquence de préambule dans le domaine fréquentiel ou dans le domaine temporel en fonction d'au moins deux conditions parmi l'état de pré-compensation et de sélection dynamique de fréquence, la valeur d'un code temps-fréquence, le type de symbole et le débit de données ;
- un combineur (313) pour combiner lesdits symboles d'entête et de charge utile et la séquence de préambule pour générer un paquet de données ; et
- des moyens d'émission (317) pour émettre ledit paquet de données.

8. Appareil (300) selon la revendication 7, comprenant en outre un dispositif d'étalement dans le temps de ladite pluralité de symboles dans le domaine fréquentiel ou dans le domaine temporel en fonction desdites deux conditions au moins.

9. Appareil (300) selon les revendications 7 ou 8, dans lequel ladite pluralité de symboles est transmise sur une pluralité de sous-porteuses et dans lequel l'émetteur comporte en outre un processeur de pré-compensation / sélection dynamique de la fréquence (DFS) (313) pour pré-compenser et sélectionner dynamiquement la fréquence desdites sous-porteuses.

10. Appareil (300) selon la revendication 9, dans lequel une première desdites deux conditions au moins est fondée sur l'état dudit processeur de pré-compensation / DFS (313) et/ou sur la valeur du code temps-fréquence.

11. Appareil (300) selon la revendication 10, dans lequel l'état dudit processeur de pré-compensation / DFS (313) comprend désactivé, activé et non activé.

12. Appareil (300) selon l'une quelconque des revendications 7 à 11, dans lequel une deuxième parmi lesdites deux conditions au moins est fondée sur le type de symbole courant et sur le débit de données.

13. Système de communications sans fil comprenant un émetteur, l'émetteur comprenant l'appareil (300) selon l'une quelconque des revendications 7 à 12.

EP 2 090 051 B1

|  | 113_1 | 113_2 | . . . . | 113_11 | 113_12 |
|---|---|---|---|---|---|
|  | hdr1 | hdr2 | --- | hdr11 | hdr12 |

| 101 | | 12 Symbols | 105 |
|---|---|---|---|
| TD Preamble | FD Preamble | HDR | Payload (variable length max = 4095 bytes) |

24 or 12 Symbols — 6 Symbols — 103

107 — 109

| CE1 | CE2 | CE3 | CE4 | CE5 | CE6 |
|---|---|---|---|---|---|

111_1    111_2    111_3    111_4    111_5    111_6

## FIG.1

FIG.2

FIG.3

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040114504 A

- US 20060188003 A